# FASCICULE DE BREVET EUROPEEN

(11) **EP 4 542 577 B1**
(45) Date de publication et mention de la délivrance du brevet: **19.08.2026**
(21) Numéro de dépôt: 24207111.6
(22) Date de dépôt: 17.10.2024
(51) Int. Cl.: G21C 3/10, B23K 35/24, G21F 5/12, B23K 1/00, B23K 1/002, B23K 1/19, C04B 37/00, B23K 35/02, G21C 21/02

(54) **PROCÉDÉ DE FERMETURE D'UN ORIFICE D'UN CONTENANT À BASE DE CARBURE DE SILICIUM**
VERFAHREN ZUM VERSCHLIESSEN EINER ÖFFNUNG EINES BEHÄLTERS AUF SILICIUMCARBIDBASIS
METHOD FOR CLOSING AN OPENING OF A SILICON CARBIDE-BASED CONTAINER

(30) Priorité: 19.10.2023 FR 2311333
(43) Date de publication de la demande: 23.04.2025
(73) Titulaire: Commissariat à l'Energie Atomique et aux Energies Alternatives, 75015 Paris (FR)
(72) Inventeur: CHAUMAT, Valérie, 38054 Grenoble (FR); EMONOT, Philippe, 91191 Gif-Sur-Yvette (FR); LORRETTE, Christophe, 38054 Grenoble (FR); MERVEILLEAU, Valérie, 38054 Grenoble (FR)
(74) Mandataire: Ipsilon

(56) Documents cités:
- US-A1- 2017 301 414
- US-A1- 2021 166 825

## Description

### Domaine technique

La présente invention concerne le domaine des procédés d'assemblage de pièces à base de carbure de silicium. En particulier, la présente invention concerne les procédés de fermeture d'un orifice d'un contenant à base de carbure de silicium.

### Technique antérieure

Les contenants à base de carbure de silicium présentent des propriétés mécaniques et thermiques les rendant adaptés à des applications variées, notamment dans le domaine nucléaire, aéronautique ou spatial. Par exemple, les contenants à base de carbure de silicium, en particulier en composite comprenant des fibres en carbure de silicium incorporées dans une matrice en carbure de silicium, sont envisagés comme composants dans les réacteurs nucléaires du futur. Notamment, ils peuvent contribuer à contenir et protéger des pastilles de combustible nucléaire tout en favorisant les échanges de chaleur. De tels contenants peuvent également être utilisés dans des échangeurs de chaleur, des turbines à gaz ou des réservoirs.

Pour fermer des contenants à base de carbure de silicium, il est connu de combler l'orifice d'ouverture du contenant par un bouchon. En fonction de l'application envisagée, il est recherché que la fermeture présente également de bonnes propriétés mécaniques et thermiques. Il est ainsi intéressant que le bouchon soit également à base de carbure de silicium. Aussi, il peut être nécessaire que le bouchon soit joint au contenant solidement et de manière résistante aux températures élevées.

Cependant, les procédés usuels permettant de joindre solidement ensemble deux pièces à base de carbure de silicium nécessitent souvent le chauffage intégral desdites pièces à des températures élevées. Par conséquent, ces procédés ne sont pas adaptés pour fermer un contenant à base de carbure de silicium dans lequel est logé un objet se détériorant auxdites températures élevées.

La demande de brevet US 2021/0166825 A1 décrit un procédé pour former un joint étanche entre une structure en carbure de silicium et un bouchon présentant une ouverture centrale afin de remplir la structure en gaz durant le procédé. Toutefois, ce procédé est complexe à mettre en œuvre.

Un procédé similaire est décrit notamment dans le document US 2017/301414 A1.

Il existe donc un besoin pour une fermeture d'un contenant à base de carbure de silicium qui soit robuste et résistante à des températures élevées, et qui soit de mise en œuvre simple et garantissant l'intégrité physique et les performances d'un objet enfermé dans le contenant.

### Exposé de l'invention

L'invention vise à répondre au moins en partie à ce besoin et propose un procédé de fermeture d'un orifice d'un contenant, le procédé comprenant les étapes successives suivantes :
a) fourniture d'un contenant à base de carbure de silicium comprenant une cavité et ouverte par l'orifice, d'un bouchon à base de carbure de silicium et d'une brasure portée par le bouchon et/ou le contenant, un objet solide étant logé dans la cavité,
b) clôture de l'orifice par brasage du bouchon sur le contenant, le brasage comprenant la fusion de la brasure par chauffage à une température supérieure à la température de fusion de la brasure, suivie d'une solidification de la brasure de sorte à former un joint solide entre le contenant et le bouchon, au moins une partie de la cavité, dite partie froide, dans laquelle est logé l'objet solide, étant maintenue à une température inférieure à la température de dégradation de l'objet solide durant le brasage; le brasage comprenant le refroidissement de la partie froide par un système de refroidissement s'étendant le long d'au moins une portion de la partie froide, ladite portion comprenant l'extrémité de la partie froide adjacente à la zone de chauffage de la brasure.

Le procédé selon la présente invention est simple, rapide à mettre en œuvre et ne dégrade pas les propriétés mécaniques et thermiques du contenant. De plus, le brasage selon l'invention ne nécessitant qu'un apport localisé de chaleur, la partie froide de la cavité reste à une température garantissant l'intégrité physique, dont la forme géométrique, de tout objet se détériorant à hautes températures, par exemple à des températures supérieures à 800 °C, qui pourrait être disposé dans la cavité. En outre, la fermeture obtenue par le procédé selon l'invention est avantageusement robuste, étanche, résistante à l'oxydation et résistante pour des températures allant au moins jusqu'à des températures proches mais strictement inférieures à la température de fusion de la brasure, typiquement jusqu'à 50°C en-dessous de la température de fusion de la brasure, par exemple jusqu'à 1200°C, voire 1300 °C, voire 1400 °C.

Une pièce « à base de carbure de silicium » est constituée d'un matériau comprenant au moins 50 % massique de carbure de silicium.

« La température de dégradation de l'objet solide » correspond à la plus haute température pour laquelle l'intégrité physique de l'objet est conservée, c'est-à-dire pour laquelle l'objet ne se déforme pas substantiellement sous son propre poids et/ou ne subit pas de changement d'état physique, par exemple un changement de phase, et/ou n'est pas altéré par une réaction chimique, et/ou ses propriétés mécaniques, notamment sa résistance au fluage, ne sont pas diminuées. De préférence, la température de dégradation de l'objet solide est égale à 0,5 fois, voire 0,4 fois, la température de fusion dudit objet.

De préférence, l'objet solide comprend au moins une pastille de combustible nucléaire. De préférence, l'étanchéité au gaz de l'objet solide est assurée par la présence d'un liner métallique en alliage de zirconium.

De préférence, la partie froide est maintenue à une température inférieure à 800 °C durant le brasage.

De préférence, le contenant est en carbure de silicium monolithique fritté ou en un composite comprenant des fibres céramiques incorporées dans une matrice en carbure de silicium, de préférence les fibres céramiques étant en carbure de silicium ou en carbone. De préférence, le contenant est en un composite comprenant des fibres en carbure de silicium incorporées dans une matrice en carbure de silicium.

De préférence, le contenant est de forme cylindrique et creuse, une des extrémités du cylindre étant ouverte par l'orifice, l'extrémité du cylindre opposée à l'orifice étant fermée.

De préférence, la partie froide représente au moins 70 %, voire au moins 80 %, voire au moins 90 %, du volume de la cavité.

De préférence, la cavité s'étend le long d'un axe longitudinal (X) et la partie froide s'étend selon au moins 70 %, voire au moins 80 %, voire au moins 90 %, de la longueur de la cavité le long de l'axe longitudinal (X).

De préférence, la cavité s'étend le long d'un axe longitudinal (X) et le joint formé par la brasure s'étend selon au moins 0,1 % de la longueur de la cavité le long de l'axe longitudinal (X), de préférence entre 0,1 % et 10 %, voire entre 0,1 % et 5 %, de la longueur de la cavité le long de l'axe longitudinal (X).

De préférence, la distance entre le bouchon et la partie froide lors du brasage est inférieure ou égale à 10 mm, de préférence inférieure à 5 mm, de préférence comprise entre 2 et 5 mm. De préférence, le chauffage est réalisé par induction d'un suscepteur agencé à proximité de l'orifice. De préférence, au moins un isolant thermique est agencé entre le suscepteur et la partie froide de la cavité. Avantageusement, la chaleur est confinée au niveau de la zone de brasage du bouchon sur le contenant durant l'étape b). Un chauffage par induction permet de raccourcir la durée de chauffage durant l'étape b).

De préférence, durant l'étape b), la durée du chauffage de la brasure à une température supérieure à la température de fusion de la brasure est comprise entre quelques secondes et 20 minutes, de préférence entre 30 secondes et 5 minutes.

De préférence, la température de chauffage de la brasure durant sa fusion à l'étape b) est supérieure ou égale à 1250 °C, voire supérieure ou égale à 1300 °C, voire supérieure ou égale à 1400 °C.

De préférence, la brasure est chauffée à une température inférieure ou égale à 1850 °C, voire à une température inférieure à 1600 °C, durant le brasage. Dans le cas où le contenant et le bouchon sont en carbure de silicium monolithique fritté, la température de chauffage de la brasure peut être comprise entre 1600 °C et 1850 °C durant le brasage. Dans le cas où au moins l'un parmi le contenant et le bouchon est en un composite comprenant des fibres céramiques incorporées dans une matrice en carbure de silicium, la température de chauffage de la brasure est de préférence inférieure à 1600 °C durant le brasage.

De préférence, durant l'étape b), la solidification de la brasure comprend un refroidissement progressif de la brasure avec une vitesse de refroidissement comprise entre 1 et 50 K/min.

De préférence, le système de refroidissement comprend un circuit fluidique dans lequel circule un fluide de refroidissement lors du brasage.

De préférence, le bouchon est en carbure de silicium monolithique fritté ou en un composite comprenant des fibres céramiques incorporées dans une matrice en carbure de silicium, de préférence les fibres céramiques étant en carbure de silicium ou en carbone. De préférence, le bouchon est en un composite comprenant des fibres en carbure de silicium incorporées dans une matrice en carbure de silicium.

De préférence, le bouchon est formé du même matériau que le contenant.

De préférence, le bouchon fourni à l'étape a) comprend au moins un évidement rempli de la brasure. Avantageusement, cela garantit un apport suffisant en brasure durant le brasage, le ou les évidements formant chacun un réservoir de brasure qui peut prendre la forme par exemple de trous remplis de brasure.

De préférence, au moins une partie de la brasure est portée par le bouchon, l'étape b) de clôture étant précédée d'une étape de chauffage du bouchon et de la brasure portée par le bouchon à une température supérieure à la température de fusion de la brasure, de préférence à une température supérieure ou égale à 1250°C, voire supérieure ou égale à 1300 °C, voire supérieure ou égale à 1400°C, durant laquelle la brasure fond puis d'une étape de solidification de la brasure. De préférence, le bouchon et la brasure portée par le bouchon sont placés dans un environnement sous vide ou sous gaz neutre durant le chauffage du bouchon et de la brasure portée par le bouchon. De préférence, le gaz neutre est de l'argon ou de l'hélium. De préférence, le chauffage du bouchon et de la brasure portée par le bouchon est réalisé à une température inférieure ou égale à 1850 °C, voire à une température inférieure à 1600 °C, durant le brasage. Dans le cas où le bouchon est en carbure de silicium monolithique fritté, la température de chauffage de la brasure peut être comprise entre 1600 °C et 1850 °C durant le brasage. Dans le cas où le bouchon est en un composite comprenant des fibres céramiques incorporées dans une matrice en carbure de silicium, la température de chauffage de la brasure est de préférence inférieure à 1600 °C durant le brasage.

Avantageusement, ce chauffage préalable du bouchon et de la brasure portée par le bouchon répartit de façon homogène la brasure sur le bouchon avant le brasage de façon à obtenir un bon apport de la brasure lors du brasage.

Dans le cas où le bouchon est un composite comprenant des fibres céramiques incorporées dans une matrice en carbure de silicium, ce chauffage préalable induit également une infiltration de la brasure à l'état liquide, lors de sa fusion, dans les porosités du bouchon. Ainsi, après l'étape de solidification, la brasure solidifiée recouvre la surface du bouchon et remplit au moins partiellement, voire complètement, les porosités du bouchon. Avantageusement, une telle infiltration de la brasure dans le bouchon améliore la diffusivité thermique, l'étanchéité et la tenue mécanique du bouchon imprégné de brasure.

De préférence, le contenant, le bouchon et la brasure sont placés dans un environnement sous gaz neutre ou sous vide durant la totalité de l'étape b) de clôture ou sous vide durant une partie de l'étape b) et sous gaz neutre durant l'autre partie de l'étape b), de préférence le gaz neutre étant de l'argon ou de l'hélium. Avantageusement, cela limite les réactions indésirables durant le brasage.

Un « environnement sous vide » est un environnement dont la pression est inférieure à 10⁻¹ Pa. L'environnement peut être mis sous vide supérieur, par exemple avec une pression comprise entre 10⁻³ Pa et 10⁻⁵ Pa.

Selon une première variante, durant l'étape a), la brasure est sous la forme d'une pâte de brasure comprenant un liant et une poudre de brasure dispersée dans le liant. De préférence, la poudre de brasure comporte un alliage de silicium ou un siliciure ou un mélange de silicium et de siliciure ou un mélange de siliciures ou un oxyde ou un mélange d'oxydes. De préférence, le liant est un gel aqueux. De préférence, le liant a une température d'évaporation inférieure à 500 °C, voire inférieure à 400 °C, de préférence proche de 300 °C. Avantageusement, une telle brasure est non réactive ou peu réactive avec le carbure de silicium et donc ne dégrade pas les propriétés mécaniques et thermiques du contenant et du bouchon lors du procédé.

Selon une deuxième variante, durant l'étape a), la brasure est sous la forme d'une multitude de granulats solides. De préférence, les granulats comportent un alliage de silicium ou un siliciure ou un mélange de silicium et de siliciure ou un mélange de siliciures ou un oxyde ou un mélange d'oxydes.

Selon une troisième variante, durant l'étape a), la brasure est sous la forme d'au moins une feuille enveloppée autour du bouchon. De préférence, la feuille comporte un alliage de silicium ou un siliciure ou un mélange de silicium et de siliciure ou un mélange de siliciures ou un oxyde ou un mélange d'oxydes.

Selon une quatrième variante, durant l'étape a), la brasure est sous la forme d'un revêtement déposé, préalablement à l'étape a), sur le pourtour externe du bouchon et/ou sur la paroi interne du contenant, par un dépôt physique par phase vapeur ou par un dépôt chimique en phase vapeur. Un tel dépôt permet une meilleure maîtrise de l'épaisseur du revêtement. Le dépôt chimique en phase vapeur peut être assisté par plasma ou peut être un dépôt de couches minces atomiques. De préférence, le revêtement comporte un alliage de silicium ou un siliciure ou un mélange de silicium et de siliciure ou un mélange de siliciures ou un oxyde ou un mélange d'oxydes.

De préférence, l'alliage de silicium ou le siliciure est composé de silicium et d'au moins un élément choisi parmi le chrome, le cobalt, le cérium, le titane, le vanadium, le zirconium, le néodyme, le praséodyme, le ruthénium, le rhodium, le rhénium, l'yttrium, l'iridium, le nickel, le platine, le palladium, l'argent, l'aluminium, le molybdène et le tungstène. De préférence, l'alliage de silicium ou le siliciure comprend au moins 50 % atomique de silicium. De préférence, l'élément est du zirconium ou du chrome. De préférence, l'alliage de silicium ou le siliciure comprend entre 90 et 42 % massique de silicium et entre 10 et 58 % massique de zirconium.

De préférence, l'oxyde est choisi parmi le dioxyde de silicium, l'alumine, l'oxyde de calcium, l'oxyde de magnésium et leurs mélanges.

De préférence, la brasure comprend également des particules de carbone et/ou de carbure de silicium.

De préférence, durant l'étape b), des particules de carbone et/ou de carbure de silicium sont disposées sous forme de poudre dans le jeu entre le contenant et le bouchon.

Avantageusement, la présence de particules de carbone et/ou de carbure de silicium dans la brasure et/ou dans le jeu entre le contenant et le bouchon résulte que le joint formé par solidification de la brasure est un composite comprenant du carbure de silicium. Dans le cas où il s'agit de particules de carbure de silicium, le siliciure ou l'oxyde de la brasure s'infiltre en phase liquide, durant le brasage, entre les particules de carbure de silicium de sorte que le joint formé par solidification de la brasure est un composite comprenant des particules de carbure de silicium. Dans le cas où il s'agit de particules de carbone, l'alliage de silicium ou le siliciure de la poudre de brasure réagit avec les particules de carbone, durant le brasage, de sorte que le joint formé par solidification de la brasure comprend du carbure de silicium.

D'autres avantages et caractéristiques ressortiront mieux à la lecture de la description détaillée, faite à titre illustratif et non limitatif, en référence aux figures suivantes.

### Brève description des dessins

[Fig 1] La figure 1 est une représentation schématique vue de face d'un contenant en carbure de silicium comprenant un orifice ouvert à une de ses extrémités.
[Fig 2] La figure 2 est une représentation schématique vue de face du contenant selon la figure 1, un bouchon étant inséré dans l'orifice.
[Fig 3] La figure 3 est une représentation schématique vue de face du contenant selon la figure 1, un bouchon étant inséré dans l'orifice et une pâte de brasure étant portée par le bouchon et le contenant.
[Fig 4] La figure 4 est une représentation schématique vue de face du contenant, du bouchon et de la pâte de brasure selon la figure 3 subissant un chauffage localisé au niveau de l'extrémité comprenant l'orifice.
[Fig 5] La figure 5 est une représentation schématique vue de face d'un contenant en carbure de silicium comprenant un orifice à une de ses extrémités, l'orifice étant condamné par un bouchon brasé au contenant.
[Fig 6], [Fig 7] et [Fig 8] les figures 6 à 8 sont des représentations schématiques en vue de face d'un bouchon portant de la pâte de brasure.
[Fig 9] la figure 9 est une représentation schématique en vue de face d'un bouchon comportant des évidements remplis de brasure.
[Fig 10] La figure 10 est une représentation schématique en coupe longitudinale d'un exemple de dispositif pour mettre en œuvre le procédé selon l'invention, en chauffant de manière localisée.
[Fig 11] La figure 11 est un graphique représentant les évolutions mesurées et simulées de la température d'un contenant au niveau de son orifice et d'un suscepteur au cours du temps durant un cycle de chauffage pour un brasage du procédé selon l'invention, le graphique représentant également l'évolution de la puissance électrique alimentant la bobine au cours du temps durant ledit cycle de chauffage.
[Fig 12] La figure 12 est une représentation schématique en coupe longitudinale d'un essai mécanique durant lequel une force de poussée est appliquée sur un bouchon fermant l'orifice d'un contenant, la fermeture étant obtenue par un procédé selon la présente invention.
[Fig 13] La figure 13 est un graphique représentant l'évolution de la force de poussée en fonction du déplacement de la charge appliquant la force de poussée mesurée durant l'essai mécanique illustré par la figure 12.

### Description détaillée

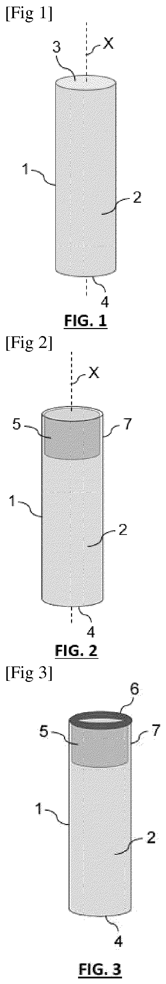

On a illustré aux figures 1 à 5 un exemple de mise en œuvre du procédé selon l'invention. Le procédé comprend une étape a) de fourniture d'un contenant 1, d'un bouchon 5 et d'une brasure 6 portée par le contenant 1 et/ou le bouchon 5. Les figures 1 à 3 représentent différentes sous-étapes d'un exemple de mise en œuvre de l'étape a).

On a illustré à la figure 1 un exemple de contenant 1. Le contenant a une forme cylindrique et creuse s'étendant le long d'un axe longitudinal X. Il comprend une cavité 2 s'étendant le long de l'axe longitudinal X, par exemple sur une longueur comprise entre 5 et 400 cm. La cavité 2 est ouverte à une des extrémités du contenant 1 par un orifice 3, l'autre extrémité 4 du contenant 1 étant fermée. Un objet solide est logé dans la cavité 2 du contenant 1. L'orifice 3 peut présenter un diamètre d'ouverture compris entre 0,5 et 50 cm. Le contenant 1 est à base de carbure de silicium, de préférence en un composite comprenant des fibres en carbure de silicium incorporées dans une matrice en carbure de silicium.

On a illustré à la figure 2 la mise en place d'un bouchon 5 dans la cavité 2. Le bouchon 5 est de forme complémentaire à la cavité 2 au niveau de l'orifice 3 de sorte à y être inséré avec un jeu faible, de préférence le jeu étant inférieur à 100 µm, pour que le bouchon 5 reste immobile lorsqu'inséré dans l'orifice 3. Il présente alors un faible interstice entre la paroi 7 du contenant 1 et le bouchon 5. Le joint formé entre le bouchon 5 et le contenant 1 à la fin du procédé selon l'invention sera alors de faible épaisseur ce qui est avantageux mécaniquement. Par exemple, le bouchon 5 est cylindrique de révolution, de diamètre compris entre 0,4 et 5 cm. Une fois inséré dans le contenant 1, le bouchon 5 s'étend le long de l'axe longitudinal X, par exemple sur une longueur comprise entre 0,5 et 5 cm. Notamment, lorsque le bouchon 5 est inséré dans le contenant 1, il occupe entre 0,1 et 10 % de la longueur de la cavité 2, mesurée selon l'axe longitudinal X. Le bouchon 5 est à base de carbure de silicium, de préférence en un composite comprenant des fibres en carbure de silicium incorporées dans une matrice en carbure de silicium.

Puis, la brasure 6 est déposée, sous forme de pâte, sur le bouchon 5 et/ou sur la paroi 7. On a illustré à la figure 3 le contenant 1 avec le bouchon 5 inséré dans l'orifice 3 et la pâte de brasure 6 déposée sur le bouchon 5 et sur la paroi 7. La présente invention ne se limite pas à une brasure 6 déposée sous forme de pâte, d'autres formes de brasure et méthodes de dépôt sont envisageables, par exemple la brasure peut être sous la forme d'une multitude de granulats ou d'une feuille ou d'un revêtement comme décrits précédemment.

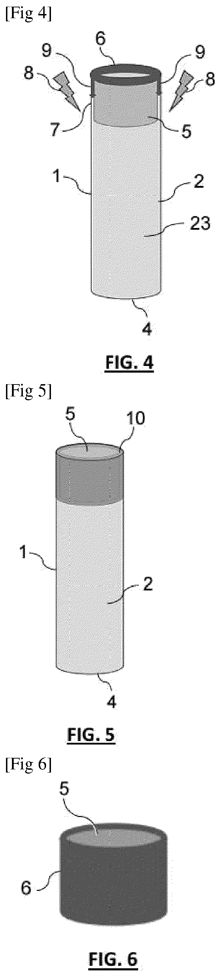

L'étape a) est suivie d'une étape b) de clôture de l'orifice 3 par brasage du bouchon 5 sur le contenant 1. Pour cela, un chauffage est réalisé de manière localisée au niveau de l'orifice 3 de sorte à chauffer le bouchon 5, la paroi 7 proche de l'orifice 3 et la brasure 6 à une température supérieure à 1250°C, voire supérieure à 1300 °C, voire supérieure à 1400 °C. On a illustré à la figure 4 ledit chauffage localisé, les éclairs 8 symbolisant l'apport ciblé de chaleur. Le chauffage localisé fait fondre la brasure 6 qui s'infiltre dans l'interstice entre le bouchon 5 et la paroi 7. La fusion et l'infiltration de la brasure 6 est symbolisée par des flèches 9. Dans le cas où le contenant 1 et/ou le bouchon 5 sont en un composite comprenant des fibres en céramique incorporées dans une matrice en carbure de silicium, alors la brasure 6 s'infiltre dans les porosités du contenant 1 et/ou du bouchon 5.

Durant le chauffage localisé, une partie de la cavité 2, dite partie froide 23, à distance de la zone de chauffage est maintenue à une température inférieure à 800 °C. La partie froide 23 s'étend sur au moins 70 % de la longueur de la cavité 2 le long de l'axe longitudinal X. Notamment, la partie froide 23 correspond à l'ensemble de la cavité 2 distant d'au moins 1 cm, de préférence d'au moins 5 mm, de préférence d'au moins 2 mm, du bouchon 5 inséré dans l'orifice 3.

Après le chauffage, le bouchon 5, le contenant 1 et la brasure 6 sont refroidis. La brasure 6 est solidifiée lors de son refroidissement formant ainsi un joint 10 solide entre le bouchon 5 et la paroi 7, comme cela est représenté par la figure 5. L'orifice 3 est ainsi condamné par le bouchon 5 fixé au contenant 1 par brasage.

Selon un autre exemple de mise en œuvre, le bouchon 5 fourni à l'étape a) porte au moins une partie de la brasure 6 avant son insertion dans le contenant 1. Puis, le bouchon 5 est inséré avec la brasure 6 dans l'orifice 3. S'ensuit l'étape b) de clôture de l'orifice 3.

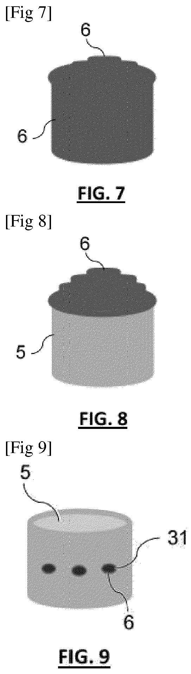

On a illustré aux figures 6, 7 et 8 différentes méthodes de dépôt de la brasure 6 sur le bouchon 5. Par exemple, la brasure 6 peut être déposée sur et portée par la surface latérale du bouchon 5, les bases du bouchon 5 n'étant pas recouvertes de la brasure 6, comme illustré par la figure 6. De manière alternative, la brasure 6 peut être déposée sur et portée par la surface latérale du bouchon 5 et la base supérieure du bouchon 5, comme illustré par la figure 7. Alternativement, la brasure 6 peut être déposée sur et portée par la base supérieure du bouchon 5, la surface latérale du bouchon 5 n'étant pas recouverte de brasure 6, comme illustré par la figure 8.

En outre, le bouchon 5 peut également comprendre au moins un évidement 31 rempli de brasure 6, comme illustré par la figure 9. Les évidements 31 forment ainsi des réservoirs à brasure 6 ce qui augmente l'apport en brasure 6 durant le brasage de l'étape b). Par exemple, les évidements 31 peuvent être des trous borgnes creusés dans la paroi latérale du bouchon 5. Le ou les évidements 31 peuvent également être des gorges radiales ou des rainures.

Préalablement à l'insertion du bouchon 5 et à l'étape b), la brasure 6 portée par le bouchon 5 peut être chauffée à une température supérieure à sa température de fusion. La brasure 6 s'écoule alors de sorte à recouvrir au moins la surface latérale du bouchon 5, voire tout le bouchon 5. Le chauffage peut être réalisé dans un four, de préférence sous vide secondaire ou sous gaz neutre, le gaz neutre étant de préférence de l'argon ou de l'hélium. Puis, une solidification de la brasure 6 par refroidissement est réalisée après ledit chauffage. Ainsi, la brasure 6 solidifiée est uniformément répartie sur le bouchon 5 assurant un bon apport de la brasure 6 lors du brasage du bouchon 5 sur le contenant 1.

Dans le cas où le bouchon 5 est en un composite comprenant des fibres en céramique incorporées dans une matrice en carbure de silicium, ce chauffage préalable induit une infiltration de la brasure dans les porosités du bouchon 5, suivie d'une solidification au refroidissement. Une telle infiltration améliore la diffusivité thermique, l'étanchéité et la tenue mécanique du bouchon 5 imprégné de brasure 6.

Les inventeurs ont réalisé des essais de traction à température ambiante afin de comparer les différences de comportement mécanique entre une éprouvette de traction non-imprégnée de brasure 6 et une éprouvette de traction dont les porosités ont été infiltrées par de la brasure 6. Les éprouvettes de traction étaient toutes en un composite comprenant des fibres en carbure de silicium dans une matrice en carbure de silicium. Les éprouvettes de traction étaient des éprouvettes cylindriques de longueur égale à 75 mm et avec une section centrale de diamètre égal à 9,50 mm. La brasure 6 utilisée était sous forme de pâte comprenant une poudre, constituée d'un alliage de silicium composé à 88 % massique de silicium et à 12 % massique de zirconium, mélangé avec un gel aqueux en tant que liant. Lors des essais de traction, une contrainte à rupture de l'ordre de 240 MPa pour une déformation de l'ordre de 0,8 à 0,9 % ont été mesurées pour l'éprouvette de traction non-imprégnée. Une contrainte à rupture de l'ordre de 280 MPa pour une déformation supérieure à 1,1 % ont été mesurées pour l'éprouvette de traction dont les porosités ont été infiltrées par de la brasure 6. Ces essais de traction montrent donc une forte amélioration de la tenue mécanique de l'éprouvette de traction lorsqu'elle est imprégnée de brasure 6.

Si la brasure 6 n'est pas répartie de façon suffisamment uniforme sur le bouchon 5 après le chauffage, un dépôt supplémentaire de brasure 6 sur le bouchon 5, notamment sur les zones en manque de brasure 6, peut être effectué. Ce dépôt est préférentiellement suivi d'un chauffage supplémentaire du bouchon 5 et de la brasure 6 portée par le bouchon 5 similairement au paragraphe précédent. Le cas échéant, ce dépôt supplémentaire comble, avantageusement, les disparités du recouvrement de la brasure 6 sur le bouchon 5 causées par l'infiltration de la brasure 6 dans les porosités du bouchon 5.

Un usinage peut être réalisé postérieurement à la solidification de la brasure 6 sur le bouchon 5 afin de réduire les aspérités formées par la brasure 6 sur le bouchon 5. Avantageusement, cela facilite l'insertion du bouchon 5 dans le contenant 1. De plus, une fois l'orifice 3 clôturé par le bouchon 5, ce dernier présente peu, voire ne présente pas, d'aspérités à sa surface en vis-à-vis avec l'objet logé dans la cavité. Dans le cas où la brasure 6 était sous la forme d'un revêtement déposé, préalablement à l'étape a), par dépôt physique par phase vapeur, ou par dépôt chimique en phase vapeur, il n'est pas intéressant de réaliser l'usinage précité car les aspérités sont négligeables.

Par ailleurs, le contenant 1 fourni à l'étape a) peut également porter au moins une partie de la brasure 6 avant l'insertion du bouchon 5 en son sein. Notamment, la brasure 6 peut recouvrir la portion de la paroi 7 sur laquelle le bouchon 5 va être brasé.

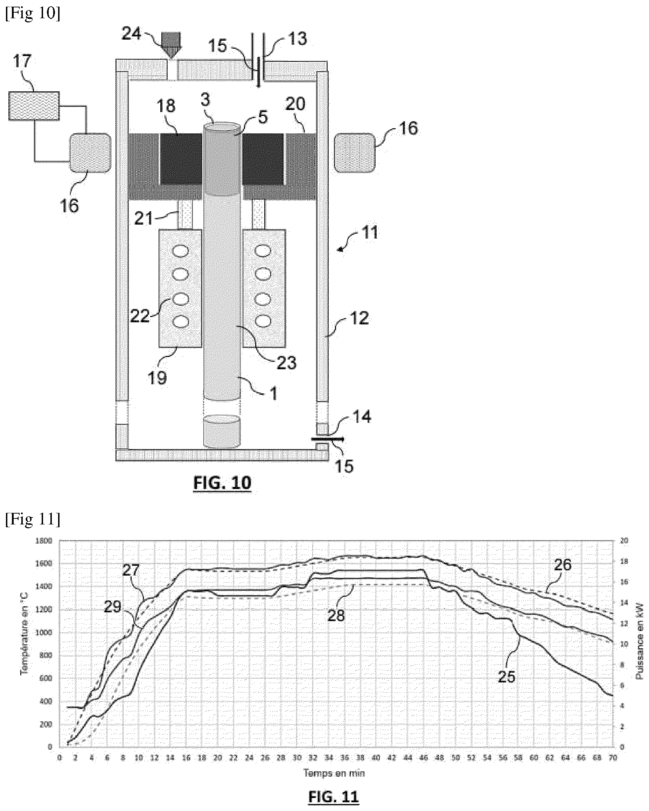

On a illustré à la figure 10 un dispositif 11 configuré pour réaliser le chauffage du brasage de l'étape b) du procédé selon la présente invention. Le dispositif 11 comprend une enceinte hermétique 12 pour loger le contenant 1 avec le bouchon 5 inséré dans l'orifice 3 et la brasure 6 portée par le bouchon 5 et/ou le contenant 1. De préférence, l'enceinte 2 est un tube en quartz.

Un conduit d'alimentation 13 débouche dans l'enceinte 12. Le conduit d'alimentation 13 est adapté à injecter un gaz neutre au sein de l'enceinte 12. Le gaz neutre peut être de l'argon ou de l'hélium. Le dispositif 11 comprend un conduit d'évacuation 14 pour évacuer les gaz présents dans l'enceinte 12. Ce conduit 14 peut également permettre à faire le vide dans l'enceinte 12. De préférence, le conduit d'alimentation 13 et le conduit d'évacuation 14 sont configurés pour que le gaz neutre circule en continu dans l'enceinte 12.

Le dispositif 11 comprend également une bobine 16 comprenant au moins une spire autour de l'enceinte 12. De préférence, la ou les spires sont en cuivre. La bobine 16 est connectée électriquement à un générateur hautes fréquences 17. Un suscepteur 18 est logé dans l'enceinte 12 et encerclé par la bobine 16. De préférence, le suscepteur 18 est en graphite. Le suscepteur 18 comprend un passage central pour accueillir le contenant 1 logé dans l'enceinte 12, le suscepteur 18 entourant alors le contenant 1 au niveau de l'orifice 3 et le bouchon 5. De préférence, la bobine 16 et le suscepteur 18 sont concentriques de sorte que le passage central du suscepteur 18 est centré au milieu de la bobine 16.

Le dispositif 11 comprend également un système de refroidissement 19 agencé dans l'enceinte 12 de sorte à s'étendre le long de la partie froide 23 du contenant 1. Notamment, le système de refroidissement 19 peut comprendre un passage central dans lequel le contenant 1 est inséré, de sorte que le système de refroidissement 19 est en vis-à-vis avec la partie froide 23 sur l'ensemble de sa longueur. De préférence, le système de refroidissement 19 comprend un circuit fluidique s'enroulant autour du passage accueillant le contenant 1, un fluide de refroidissement, de préférence de l'eau, étant destiné à circuler dans le circuit fluidique. De préférence, les canaux 22 du circuit fluidique sont en cuivre ou en laiton.

Il n'est pas nécessaire que le système de refroidissement 19 s'étende sur toute la longueur de la partie froide 23. La partie froide 23 peut comprendre une portion éloignée de la zone de chauffage de sorte qu'elle n'est pas affectée significativement par le chauffage durant l'étape b), c'est-à-dire qu'elle resterait à température ambiante même sans refroidissement. Le cas échéant, il n'est pas nécessaire que le système de refroidissement 19 s'étende le long de la portion éloignée précitée. Par ailleurs, un premier isolant thermique 20 est agencé entre la paroi de l'enceinte 12 et le suscepteur 18 et entre le suscepteur 18 et le système de refroidissement 19. De préférence, le premier isolant thermique 20 est en graphite isolant, par exemple en graphite fibreux. De plus, un deuxième isolant thermique 21 est agencé entre le premier isolant thermique 20 et le système de refroidissement 19. Le deuxième isolant thermique 21 peut être en oxyde, par exemple en alumine.

Le chauffage réalisé par le dispositif 11 est un chauffage localisé et inductif. Tout d'abord, le contenant 1 est mis en place dans l'enceinte 12 avec le bouchon 5 inséré dans l'orifice 3 et la brasure 6 portée par le bouchon 5 et/ou par le contenant 1. Une fois le contenant 1 mis en place, le suscepteur 18 entoure la paroi 7 au niveau de l'orifice 3, le bouchon 5 et la brasure 6, et, le système de refroidissement 19 s'étend le long de la partie froide 23.

Ensuite, le gaz neutre est injecté dans l'enceinte 12. Le vide peut être fait dans l'enceinte 12 préalablement à l'injection du gaz neutre. De préférence, l'injection du gaz neutre est telle que l'enceinte 12 est à pression atmosphérique. De préférence, le gaz neutre est injecté par le conduit d'alimentation 13 puis évacué par le conduit d'évacuation 14 de sorte à maintenir une circulation continue du gaz neutre dans l'enceinte 12. Le sens de circulation du gaz neutre dans l'enceinte 12 est représenté par les flèches 15.

Par la suite, le système de refroidissement 19 est mis en marche pour refroidir la partie froide 23. Notamment, un fluide de refroidissement, de préférence de l'eau, peut être mis en circulation dans le circuit fluidique.

Puis, le générateur hautes fréquences 17 alimente électriquement la bobine 16 qui génère alors un champ magnétique. Le suscepteur 18 convertit par induction l'énergie du champ magnétique en chaleur, ce qui chauffe par conduction et de manière localisée la paroi 7 du contenant 1 au niveau de son orifice 3, le bouchon 5 et la brasure 6. La puissance électrique alimentée par le générateur hautes fréquences 17 est progressivement augmentée de sorte à faire monter progressivement la température de chauffage jusqu'à au moins 1250°C, voire au moins 1300 °C, voire au moins 1400 °C. Lors du chauffage par conduction, les premier et deuxième isolants thermiques 20 et 21 confinent la chaleur produite par le suscepteur 18 au niveau de la zone de brasage du bouchon 5 sur le contenant 1 ce qui améliore ainsi la localisation du chauffage. Le système de refroidissement 19 refroidit en continu, durant le chauffage, la partie froide 23, qui est maintenue à une température inférieure à 800 °C.

Ainsi, le dispositif 11 illustré à la figure 10 permet de réaliser l'étape b) de clôture de l'orifice 3 par brasage du bouchon 5 sur le contenant 1. Le dispositif 11 chauffe localement par induction la brasure 6 portée par le bouchon 5 et/ou par le contenant 1 et fond ladite brasure 6 pour braser le bouchon 5 sur le contenant 1. En outre, le dispositif 11 maintient la partie froide 23 à basse température durant le chauffage. Le maintien à basse température est obtenu par isolation thermique entre la partie froide 23 et la zone de brasage du bouchon 5 sur le contenant 1 et par refroidissement de la partie froide 23 par le système de refroidissement 19.

Les inventeurs ont réalisé des simulations et des mesures afin de déterminer l'évolution au cours du temps des températures mises en jeu durant un brasage du procédé selon la présente invention. Pour cela, le dispositif 11 comprend un pyromètre 24 mesurant la température du suscepteur 18 et la température du contenant 1 au niveau l'orifice 3. Le dispositif 11 comprend également un thermocouple, non représenté ici, mesurant la température du suscepteur 18 et la température du contenant 1 au niveau l'orifice 3. Les mesures effectuées par le pyromètre 24 ont été comparées avec les mesures effectuées par le thermocouple. On a illustré à la figure 11 les résultats de ces simulations et de ces mesures. Les simulations et les mesures ont été réalisées pour un cycle de chauffage durant lequel la puissance électrique moyenne alimentant la bobine 16 atteint un premier palier à 15 kW durant 10 minutes puis un deuxième palier à 17 kW durant 10 minutes. La courbe 25 représente l'évolution de la puissance électrique moyenne alimentant la bobine 16 au cours du cycle de chauffage.

La courbe 26 représente l'évolution de la température simulée du suscepteur 18 au cours du cycle de chauffage. La courbe 27 représente l'évolution de la température mesurée du suscepteur 18 au cours du cycle de chauffage. Les courbes 26 et 27 montrent que le suscepteur 18 atteint une température de 1560 °C durant le premier palier puis une température de 1620 °C durant le deuxième palier.

La courbe 28 représente l'évolution de la température simulée du contenant 1 au niveau de l'orifice 3 au cours du cycle de chauffage. Elle montre que la température du contenant 1 au niveau de l'orifice 3 atteint une température de 1300 °C durant le premier palier puis une température de 1420 °C durant le deuxième palier. La courbe 29 représente l'évolution de la température mesurée du contenant 1 au niveau de l'orifice 3 au cours du cycle de chauffage. La courbe 29 montre que la température du contenant 1 au niveau de l'orifice 3 atteint une température de 1320 °C durant le premier palier puis une température de 1480 °C durant le deuxième palier. Aussi, la température simulée ou mesurée du contenant 1 au niveau de l'orifice 3 durant chacun des premier et deuxième paliers est supérieure ou égale à 1300 °C, comme désiré pour le brasage de l'étape b) du procédé selon l'invention.

Les inventeurs ont également simulé l'évolution de la température de la partie froide 23 au cours du cycle de chauffage décrit précédemment. La température maximale de la partie froide 23 obtenue par cette simulation est de 725 °C. Cette température est donc bien inférieure à 800 °C.

Les inventeurs ont testé la résistance mécanique d'une fermeture obtenue selon la présente invention. Pour cela, ils ont fermé un contenant 1 à partir du procédé selon la présente invention. Le contenant 1 et le bouchon 5 fournis étaient en composite comprenant des fibres en carbure de silicium incorporées dans une matrice en carbure de silicium. La brasure 6 utilisée était sous forme de pâte comprenant une poudre, constituée d'alliage de silicium composé à 88,5 % massique de silicium et à 11,5 % massique de zirconium, mélangé avec un gel aqueux, par exemples le gel dénommé « Vitta Braz-Binder Gel Grade ST » ou le cément « Nicrobraz » disponibles dans le commerce, en tant que liants. Environ 400 mg de la pâte de brasure 6 ont été déposés sur le bouchon 5. Puis le bouchon 5 et la pâte de brasure 6 portée par le bouchon ont été chauffés sous argon dans un four de brasage à 1420 °C de sorte à faire fondre la brasure 6 qui a recouvert complétement le bouchon 5 et rempli un évidement creusé dans le bouchon 5. La brasure 6 portée par le bouchon 5 a ensuite été solidifiée par refroidissement et un usinage a été réalisé pour supprimer les aspérités formées par la brasure 6 sur le bouchon 5 et susceptibles de gêner l'insertion du bouchon 5 dans le contenant 1. Subséquemment, le bouchon 5 a été brasé sur le contenant 1 pour clôturer l'orifice 3 du contenant 1. Le brasage a été réalisé dans le dispositif 11 illustré à la figure 10 comme expliqué précédemment. Le brasage a compris un chauffage de la paroi 7 du contenant 1 au niveau de son orifice 3, du bouchon 5 et de la brasure 6 à une température de 1420 °C pendant 10 minutes suivi d'un refroidissement progressif de la brasure 6.

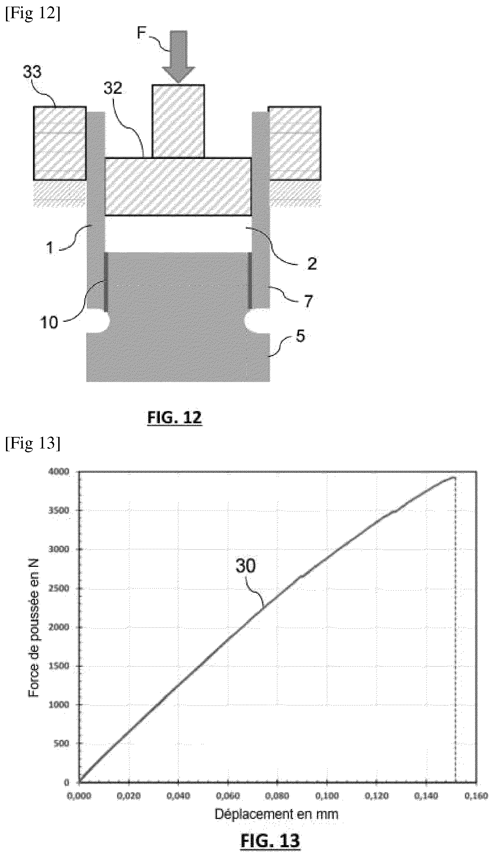

Pour tester la robustesse de la fermeture du contenant 1 obtenu selon le paragraphe précédent, les inventeurs ont réalisé un essai mécanique, de type « pull-out », comme illustré par la figure 12. Cet essai mécanique comprend l'application d'une force de poussée F sur le bouchon 5 à l'aide d'un piston 32 afin de générer une sollicitation en cisaillement sur le joint 10 entre le bouchon 5 et la paroi 7, le contenant 1 étant porté par un châssis 33 durant l'essai mécanique.

On a illustré à la figure 13 le résultat de cet essai mécanique. La courbe 30 représente la force de poussée F en fonction du déplacement du piston 32 durant cet essai mécanique. La force de poussée maximale appliquée avant rupture de la fermeture est de 3925 N. La fermeture du contenant 1 présente donc une résistance à la rupture de 221 MPa, une résistance nominale au cisaillement de 30,4 MPa et une pression d'éclatement de 736 bar. Par ailleurs, la rupture n'a pas eu lieu sur le joint 10 mais c'est la paroi 7 du contenant 1 au-delà du joint 10 qui a rompu. Ainsi, le joint 10 formé par le procédé selon la présente invention est plus résistant que le contenant 1.

D'autres variantes et améliorations peuvent être envisagées sans pour autant sortir du cadre de l'invention tel que défini par les revendications ci-après.

## Revendications

1. Procédé de fermeture d'un orifice d'un contenant, le procédé comprenant les étapes successives suivantes :
a) fourniture d'un contenant (1) à base de carbure de silicium comprenant une cavité (2) ouverte par un orifice (3), d'un bouchon (5) à base de carbure de silicium et d'une brasure (6) portée par le bouchon et/ou le contenant, un objet solide étant logé dans la cavité,
b) clôture de l'orifice par brasage du bouchon sur le contenant, le brasage comprenant la fusion de la brasure par chauffage à une température supérieure à la température de fusion de la brasure, suivie d'une solidification de la brasure de sorte à former un joint (10) solide entre le contenant et le bouchon, au moins une partie de la cavité, dite partie froide (23), dans laquelle est logé l'objet solide, étant maintenue à une température inférieure à la température de dégradation de l'objet solide durant le brasage,
**caractérisé en ce que** le brasage comprend le refroidissement de la partie froide par un système de refroidissement (19) s'étendant le long d'au moins une portion de la partie froide, ladite portion comprenant l'extrémité de la partie froide adjacente à la zone de chauffage de la brasure.

2. Procédé selon la revendication 1, l'objet solide comprenant au moins une pastille de combustible nucléaire.

3. Procédé selon l'une des revendications précédentes, le contenant étant en carbure de silicium monolithique fritté ou en un composite comprenant des fibres céramiques incorporées dans une matrice en carbure de silicium, de préférence les fibres céramiques étant en carbure de silicium ou en carbone.

4. Procédé selon l'une des revendications précédentes, le contenant étant de forme cylindrique creuse, une des extrémités du cylindre étant ouverte par l'orifice, l'extrémité (4) du cylindre opposée à l'orifice étant fermée.

5. Procédé selon l'une des revendications précédentes, la partie froide représentant au moins 70 %, voire au moins 80 %, voire au moins 90 %, du volume de la cavité.

6. Procédé selon l'une des revendications précédentes, la distance entre le bouchon et la partie froide lors du brasage étant inférieure ou égale à 10 mm, de préférence inférieure à 5 mm, de préférence comprise entre 2 et 5 mm.

7. Procédé selon l'une des revendications précédentes, le chauffage étant réalisé par induction d'un suscepteur (18) agencé à proximité de l'orifice, de préférence au moins un isolant thermique (20, 21) étant agencé entre le suscepteur et la partie froide de la cavité.

8. Procédé selon l'une des revendications précédentes, la brasure étant chauffée à une température supérieure ou égale à 1250 °C, voire supérieure ou égale à 1300 °C, voire supérieure ou égale à 1400 °C, durant le brasage.

9. Procédé selon l'une des revendications précédentes, la brasure étant chauffée à une température inférieure ou égale à 1850 °C, voire inférieure à 1600 °C, durant le brasage.

10. Procédé selon l'une des revendications précédentes, le système de refroidissement comprenant un circuit fluidique dans lequel circule un fluide de refroidissement lors du brasage.

11. Procédé selon l'une des revendications précédentes, le bouchon étant en carbure de silicium monolithique fritté ou en un composite comprenant des fibres céramiques incorporées dans une matrice en carbure de silicium, de préférence les fibres céramiques étant en carbure de silicium ou en carbone.

12. Procédé selon l'une des revendications précédentes, le bouchon fourni à l'étape a) comprenant un évidement (31) rempli de la brasure.

13. Procédé selon l'une des revendication précédentes, au moins une partie de la brasure étant portée par le bouchon, l'étape b) de clôture étant précédée d'une étape de chauffage du bouchon et de la brasure portée par le bouchon à une température supérieure à la température de fusion de la brasure, de préférence à une température supérieure ou égale à 1250°C, voire supérieure ou égale à 1300 °C, voire supérieure ou égale à 1400°C, durant laquelle la brasure fond puis d'une étape de solidification de la brasure.

14. Procédé selon l'une des revendications précédentes, le contenant, le bouchon et la brasure étant placés dans un environnement sous vide ou sous gaz neutre durant la totalité de l'étape b) de clôture, ou sous vide durant une partie de l'étape b) et sous gaz neutre durant l'autre partie de l'étape b), de préférence le gaz neutre étant de l'argon ou de l'hélium.

15. Procédé selon l'une des revendications précédentes, durant l'étape a), la brasure étant sous une forme choisie parmi les suivantes :
- une pâte de brasure comprenant un liant et une poudre de brasure dispersée dans le liant,
- une multitude de granulats solides,
- au moins une feuille enveloppée autour du bouchon,
- un revêtement déposé, préalablement à l'étape a), sur le pourtour externe du bouchon et/ou sur la paroi interne du contenant, par un dépôt physique par phase vapeur ou par un dépôt chimique en phase vapeur,
de préférence la poudre de brasure, les granulats, la feuille ou le revêtement comportant un alliage de silicium ou un siliciure ou un mélange de silicium et siliciure ou un mélange de siliciures ou un oxyde ou un mélange d'oxydes.

## Patentansprüche

1. Verfahren zum Verschließen einer Öffnung eines Behälters, wobei das Verfahren die folgenden aufeinander folgenden Schritte umfasst:
a) Bereitstellung eines Behälters (1) auf Siliciumcarbidbasis, der einen Hohlraum (2) umfasst, der durch eine Öffnung (3) offen ist, eines Verschlusses (5) auf Siliciumcarbidbasis und eines Lots (6), das von dem Verschluss und/oder dem Behälter getragen wird, wobei ein fester Gegenstand in dem Hohlraum untergebracht ist,
b) Schließen der Öffnung durch Löten des Verschlusses an den Behälter, wobei das Löten das Schmelzen des Lots durch Erhitzen auf eine Temperatur über der Schmelztemperatur des Lots, gefolgt von einem Erstarren des Lots, umfasst, so dass eine feste Dichtung (10) zwischen dem Behälter und dem Verschluss gebildet wird, wobei mindestens ein Teil des Hohlraums, kalter Teil (23) genannt, in dem der feste Gegenstand untergebracht ist, während des Lötens auf einer Temperatur unter der Degradationstemperatur des festen Gegenstands gehalten wird,
**dadurch gekennzeichnet, dass** das Löten das Kühlen des kalten Teils durch ein Kühlsystem (19) umfasst, das sich entlang mindestens eines Abschnitts des kalten Teils erstreckt, wobei der Abschnitt das an den Erhitzungsbereich des Lots angrenzende Ende des kalten Teils umfasst.

2. Verfahren nach Anspruch 1, wobei der feste Gegenstand mindestens ein Kernbrennstoffpellet umfasst.

3. Verfahren nach einem der vorhergehenden Ansprüche, wobei der Behälter aus gesintertem monolithischem Siliciumcarbid ist oder aus einem Verbundwerkstoff, der in eine Siliciumcarbidmatrix eingebettete Keramikfasern umfasst, wobei die Keramikfasern vorzugsweise aus Siliciumcarbid oder Kohlenstoff bestehen.

4. Verfahren nach einem der vorhergehenden Ansprüche, wobei der Behälter von hohlzylindrischer Form ist, wobei eines der Enden des Zylinders durch die Öffnung offen ist, wobei das zu der Öffnung entgegengesetzte Ende (4) des Zylinders verschlossen ist.

5. Verfahren nach einem der vorhergehenden Ansprüche, wobei der kalte Teil mindestens 70 % oder sogar mindestens 80 % oder sogar mindestens 90 % des Volumens des Hohlraums ausmacht.

6. Verfahren nach einem der vorhergehenden Ansprüche, wobei der Abstand zwischen dem Verschluss und dem kalten Teil beim Löten 10 mm oder weniger, vorzugsweise weniger als 5 mm, vorzugsweise zwischen 2 und 5 mm beträgt.

7. Verfahren nach einem der vorhergehenden Ansprüche, wobei das Erhitzen durch Induktion eines in der Nähe der Öffnung angeordneten Suszeptors (18) erfolgt, wobei vorzugsweise mindestens ein Wärmedämmstoff (20, 21) zwischen dem Suszeptor und dem kalten Teil des Hohlraums angeordnet ist.

8. Verfahren nach einem der vorhergehenden Ansprüche, wobei das Lot während des Lötens auf eine Temperatur von 1250 °C oder mehr oder sogar 1300 °C oder mehr oder sogar 1400 °C oder mehr erhitzt wird.

9. Verfahren nach einem der vorhergehenden Ansprüche, wobei das Lot während des Lötens auf eine Temperatur von 1850 °C oder weniger oder sogar weniger als 1600 °C erhitzt wird.

10. Verfahren nach einem der vorhergehenden Ansprüche, wobei das Kühlsystem einen Fluidkreislauf umfasst, in dem beim Löten ein Kühlfluid zirkuliert.

11. Verfahren nach einem der vorhergehenden Ansprüche, wobei der Verschluss aus gesintertem monolithischem Siliciumcarbid ist oder aus einem Verbundwerkstoff, der in eine Siliciumcarbidmatrix eingebettete Keramikfasern umfasst, wobei die Keramikfasern vorzugsweise aus Siliciumcarbid oder Kohlenstoff sind.

12. Verfahren nach einem der vorhergehenden Ansprüche, wobei der im Schritt a) bereitgestellte Verschluss eine Vertiefung (31) umfasst, die mit Lot gefüllt ist.

13. Verfahren nach einem der vorhergehenden Ansprüche, wobei mindestens ein Teil des Lots von dem Verschluss getragen wird, wobei dem Schritt b) des Schließens ein Schritt des Erhitzens des Verschlusses und des von dem Verschluss getragenen Lots auf eine Temperatur über der Schmelztemperatur des Lots, vorzugsweise auf eine Temperatur von 1250 °C oder mehr oder sogar von 1300 °C oder mehr oder sogar von 1400 °C oder mehr, während dessen das Lot schmilzt, und dann ein Schritt des Erstarrens des Lots vorausgeht.

14. Verfahren nach einem der vorhergehenden Ansprüche, wobei der Behälter, der Verschluss und das Lot während des gesamten Schritts b) des Schließens in einer Umgebung unter Vakuum oder unter neutralem Gas oder während eines Teils des Schritts b) unter Vakuum und während des anderen Teils des Schritts b) unter neutralem Gas platziert werden, wobei das neutrale Gas vorzugsweise Argon oder Helium ist.

15. Verfahren nach einem der vorhergehenden Ansprüche, wobei das Lot während des Schritts a) in einer Form vorliegt, die aus den folgenden ausgewählt ist:
- einer Lotpaste, die ein Bindemittel und ein in dem Bindemittel dispergiertes Lotpulver umfasst,
- einer Vielzahl von festen Granulaten,
- mindestens einer Folie, die um den Verschluss gewickelt ist,
- einer Beschichtung, die vor dem Schritt a) durch eine physikalische Gasphasenabscheidung oder durch eine chemische Gasphasenabscheidung auf dem Außenumfang des Verschlusses und/oder auf der Innenwand des Behälters abgeschieden wird,
wobei das Lotpulver, die Granulate, die Folie oder die Beschichtung vorzugsweise eine Siliciumlegierung oder ein Silicid oder eine Mischung aus Silicium und Silicid oder eine Mischung von Siliciden oder ein Oxid oder eine Mischung von Oxiden umfassen.

## Claims

1. Method for closing an orifice of a container, the method comprising the following successive steps:
a) provision of a silicon carbide-based container (1) comprising a cavity (2) that is open by an orifice (3), of a silicon carbide-based plug (5) and of a brazing material (6) borne by the plug and/or the container, a solid object being housed in the cavity,
b) closure of the orifice by brazing of the plug onto the container, the brazing comprising the melting of the brazing material by heating to a temperature greater than the melting temperature of the brazing material, followed by solidification of the brazing material so as to form a solid joint (10) between the container and the plug, at least a part of the cavity, referred to as cold part (23), in which the solid object is housed, being kept at a temperature lower than the degradation temperature of the solid object during the brazing,
**characterized in that** the brazing comprises the cooling of the cold part by a cooling system (19) extending along at least a portion of the cold part, said portion comprising the end of the cold part adjacent to the heating zone for the brazing material.

2. Method according to Claim 1, the solid object comprising at least one nuclear fuel pellet.

3. Method according to either of the preceding claims, the container being made of sintered monolithic silicon carbide or of a composite comprising ceramic fibres incorporated in a silicon carbide matrix, the ceramic fibres preferably being made of silicon carbide or of carbon.

4. Method according to one of the preceding claims, the container being of hollow cylindrical shape, one of the ends of the cylinder being open by the orifice, the end (4) of the cylinder on the opposite side from the orifice being closed.

5. Method according to one of the preceding claims, the cold part representing at least 70%, or even at least 80%, or even at least 90%, of the volume of the cavity.

6. Method according to one of the preceding claims, the distance between the plug and the cold part during the brazing being less than or equal to 10 mm, preferably less than 5 mm, preferably between 2 and 5 mm.

7. Method according to one of the preceding claims, the heating being carried out by induction by a susceptor (18) arranged in the vicinity of the orifice, at least one thermal insulator (20, 21) preferably being arranged between the susceptor and the cold part of the cavity.

8. Method according to one of the preceding claims, the brazing material being heated to a temperature greater than or equal to 1250°C, or even greater than or equal to 1300°C, or even greater than or equal to 1400°C, during the brazing.

9. Method according to one of the preceding claims, the brazing material being heated to a temperature lower than or equal to 1850°C, or even lower than 1600°C, during the brazing.

10. Method according to one of the preceding claims, the cooling system comprising a fluidic circuit in which a cooling fluid circulates during the brazing.

11. Method according to one of the preceding claims, the plug being made of sintered monolithic silicon carbide or of a composite comprising ceramic fibres incorporated in a silicon carbide matrix, the ceramic fibres preferably being made of silicon carbide or of carbon.

12. Method according to one of the preceding claims, the plug provided in step a) comprising a cutout (31) filled with the brazing material.

13. Method according to one of the preceding claims, at least a part of the brazing material being borne by the plug, the closure step b) being preceded by a step of heating the plug and the brazing material borne by the plug to a temperature greater than the melting temperature of the brazing material, preferably to a temperature greater than or equal to 1250°C, or even greater than or equal to 1300°C, or even greater than or equal to 1400°C, during which the brazing material melts, and then by a step of solidifying the brazing material.

14. Method according to one of the preceding claims, the container, the plug and the brazing material being placed in an environment under vacuum or under inert gas throughout the closure step b), or under vacuum for one part of step b) and under inert gas for the other part of step b), the inert gas preferably being argon or helium.

15. Method according to one of the preceding claims, during step a), the brazing material being in a form selected from the following:
- a brazing paste comprising a binder and a brazing powder dispersed in the binder,
- a multitude of solid granules,
- at least one sheet wrapped around the plug,
- a coating deposited, prior to step a), on the outer periphery of the plug and/or on the inner wall of the container, by physical vapour deposition or by chemical vapour deposition,
the brazing powder, the granules, the sheet or the coating preferably comprising a silicon alloy or a silicide or a mixture of silicon and silicide or a mixture of silicides or an oxide or a mixture of oxides.
